Europäisches Patentamt

European Patent Office

Office européen des brevets

(19)

(11) EP 1 452 222 A1

## (12) EUROPEAN PATENT APPLICATION

(43) Date of publication:
01.09.2004 Bulletin 2004/36

(51) Int Cl.$^7$: **B01D 53/86**, B01J 23/46

(21) Application number: 03293151.1

(22) Date of filing: 15.12.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **27.02.2003 JP 2003051787**

(71) Applicant: **Mitsubishi Heavy Industries, Ltd. Tokyo 108-8215 (JP)**

(72) Inventors:
• **Nojima, Shigeru,**
**Mitsubishi Heavy Industries, Ltd.**
**Nishi-ku, Hiroshima, Hiroshima-ken 1 (JP)**

• **Lida, Kozo, Mitsubishi Heavy Industries, Ltd.**
**Nishi-ku, Hiroshima, Hiroshima-ken 1 (JP)**
• **Kiyosawa, Masashi,**
**Mitsubishi Heavy Industries, Lt**
**Nagasaki, Nagasaki-ken (JP)**

(74) Representative: **Intès, Didier Gérard André et al**
**Cabinet Beau de Loménie,**
**158, rue de l'Université**
**75340 Paris Cedex 07 (FR)**

### (54) Exhaust gas treatment system and exhaust gas treatment

(57)    There is provided an exhaust gas treatment system for removing nitrogen oxide and sulfur trioxide in exhaust gas by using a catalyst characterized in that a $SO_3$ reducing catalyst (2) on the upstream side and a denitrifying catalyst (3) on the downstream side are arranged in series with respect to the flow direction of exhaust gas. Also, there is provided an exhaust gas treatment method characterized by including a $SO_3$ reducing process for reducing $SO_3$ using a $SO_3$ reducing catalyst on the upstream side and a denitrifying process for removing nitrogen oxides using a denitrifying catalyst on the downstream side with respect to the flow direction of exhaust gas.

FIG.1

EP 1 452 222 A1

**Description**

**Field of the Invention**

The present invention relates to an exhaust gas treatment system and an exhaust gas treatment method and, more particularly, to an exhaust gas treatment method in which exhaust gas such as nitrogen oxides and sulfur trioxide ($SO_3$) exhausted from a boiler or the like is removed by reduction using a catalyst.

**Background of the Invention**

As a catalyst for removing sulfur trioxide ($SO_3$) in exhaust gas by reaction, catalysts in which ruthenium (Ru) is carried on various carriers have been reported (see Japanese Patent Provisional Publication No.10-24963 (No. 24963/1998).

A $SO_3$ reducing reaction using a ruthenium (Ru) carrying catalyst converts sulfur trioxide ($SO_3$) into sulfur dioxide ($SO_2$) using ammonia ($NH_3$) as a reducing agent according to the following reaction formula (1).

$$SO_3 + 2NH_3 + O_2 \rightarrow SO_2 + N_2 + 3H_2O \qquad (1)$$

However, in the case where the aforementioned ruthenium (Ru) carrying catalyst is used, in a system in which the concentration of ammonia ($NH_3$) is low, the reaction expressed by the above formula (1) is extremely slow, so that there arises a problem in that the reducing reaction does not proceed sufficiently.

On the one hand, combustion exhaust gas exhausted from a coal-fired or oil-fired combustion boiler is a gas containing nitrogen oxides. In order to discharge this gas, it is necessary to remove nitrogen oxides in the exhaust gas. Therefore, a denitrifier is provided on the downstream side of the combustion boiler so that ammonia ($NH_3$) is injected into the combustion exhaust gas through an injection nozzle to be caused to react with nitrogen oxides ($NO$, $NO_2$) by reduction, by which the exhaust gas is decomposed into nitrogen ($N_2$) and water ($H_2O$), which are harmless. At this time, in a method in which nitrogen oxides are removed from exhaust gas using a denitrifying catalyst, ammonia is usually added to cause sufficient denitrifying reaction.

In a system for treating exhaust gas exhausted from a combustion boiler, a technology in which sulfur trioxide ($SO_3$) is not caused to flow to equipment on the downstream side as far as possible is demanded because $SO_3$ contained in the exhaust gas is responsible for corrosion and deterioration of equipment.

On the other hand, the aforementioned ruthenium (Ru) carrying catalyst not only can remove sulfur trioxide ($SO_3$) by reduction, but also can reduce nitrogen oxides (NOx) in the exhaust gas using ammonia ($NH_3$) according to the following reaction formula (2) to convert them into nitrogen gas ($N_2$) .

$$4NH_3 + 4NO + O_2 \rightarrow 4N_2 + 6H_2O \qquad (2)$$

**Summary of the Invention**

In view of the above situation, the inventors carried out studies earnestly to develop a catalyst system and a treatment method capable of efficiently removing nitrogen oxides (NOx) and sulfur trioxide ($SO_3$) by reaction at the same time in the treatment of exhaust gas containing NOx and $SO_3$.

As a result, the inventors found that the above problems can be solved by using a catalyst system in which a $SO_3$ reducing catalyst and a denitrifying catalyst are arranged in series and combined. The present invention was completed from the above-described viewpoint.

The present invention provides an exhaust gas treatment system for removing nitrogen oxide and sulfur trioxide in exhaust gas by using a catalyst, characterized in that a $SO_3$ reducing catalyst on the upstream side and a denitrifying catalyst on the downstream side are arranged in series with respect to the flow direction of exhaust gas.

In the present invention, the $SO_3$ reducing catalyst is preferably a catalyst in which Ru is carried as an active metal on a carrier. The carrier used for the $SO_3$ reducing catalyst preferably contains at least one kind selected from a group consisting of titania, alumina, zirconia, silica, and zeolite. The $SO_3$ reducing catalyst can contain at least one kind selected from a group consisting of Mo, W and V as a co-catalyst in the carrier. The denitrifying catalyst can use a catalyst that carries at least one kind selected from a group consisting of Mo, W and V as an active metal on a carrier containing titania. The shapes of the $SO_3$ reducing catalyst and the denitrifying catalyst are not subject to any special restriction, and both of these catalysts can be, for example, a catalyst formed into a honeycomb shape.

Also, the present invention provides an exhaust gas treatment method for removing nitrogen oxide and sulfur trioxide in exhaust gas by using a catalyst, characterized in that the treatment method includes a $SO_3$ reducing process for reducing $SO_3$ using a $SO_3$ reducing catalyst on the upstream side and a denitrifying process for removing nitrogen oxides using a denitrifying catalyst on the downstream side with respect to the flow direction of exhaust gas. The treating method in accordance with the present invention preferably includes an $NH_3$ adding process for adding ammonia $NH_3$, which is a reducing agent for nitrogen oxides and $SO_3$, in a mole ratio of $NH_3/NOx$ favorably not lower than the equivalent at the preceding stage of the $SO_3$ reducing process. Also, the concentration of $NH_3$ at the downstream outlet of the $SO_3$ reducing catalyst is preferably 3 ppm or higher in the $SO_3$ reducing process.

According to the treatment method and treatment system in accordance with the present invention, in the treatment of exhaust gas containing nitrogen oxides (NOx) and sulfur trioxide ($SO_3$), NOx and $SO_3$ can be removed by reduction efficiently at the same time. Therefore, in the exhaust gas treatment using the system in accordance with the present invention, in particular, equipment on the downstream side of the denitrifier is less liable to be deteriorated or damaged, so that this treatment system has an advantage that the maintenance of the whole system is easy and the long-term use is ensured.

### Brief Description of the Drawings

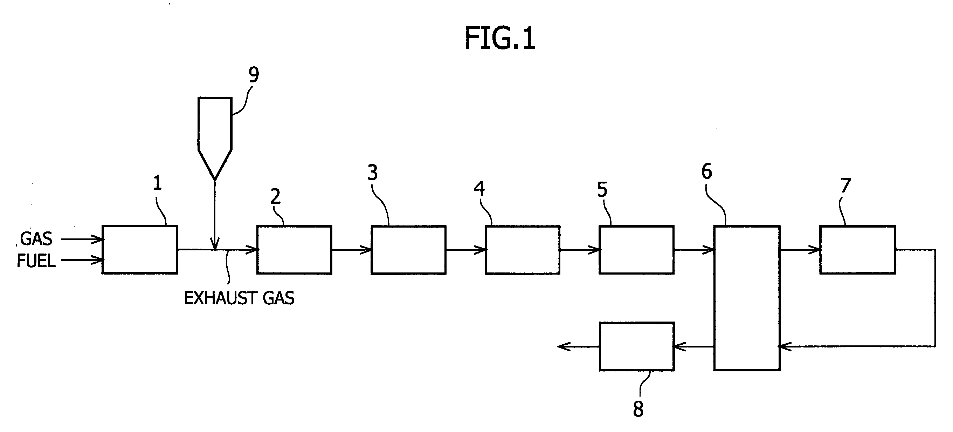

Figure 1 is a block diagram showing one example of a system incorporating an exhaust gas treatment system in accordance with the present invention.

The reference numerals shown in these figures are defined as follows: 1, boiler; 2, $SO_3$ reducing catalyst; 3, denitrifier; 4, air preheater; 5, dust collector; 6, gas-gas heater (heat exchanger); 7, desulfurizer; 8, stack.

### Detailed Description of the Preferred Embodiments

An embodiment of an exhaust gas treatment system and an exhaust gas treatment method in accordance with the present invention will be described. The present invention is not subject to any restriction by the embodiment described below.

Exhaust gas treatment method

In the exhaust gas treatment method in accordance with the present invention, a $SO_3$ reducing process is conducted on the upstream side and a denitrifying process is conducted on the downstream side with respect to the flow direction of exhaust gas containing nitrogen oxides. At the preceding stage of the $SO_3$ reducing process, ammonia $NH_3$, which is a reducing agent for nitrogen oxides and $SO_3$ in exhaust gas, is added by an $NH_3$ adding process. In the $NH_3$ adding process, ammonia should be added to the exhaust gas in a mole ratio $NH_3/NOx$ of ammonia to nitrogen oxides NOx preferably not lower than the equivalent (not lower than 1), further preferably not lower than 1.2. Since the concentration of ammonia added to the exhaust gas is high at the preceding stage of the process in which reducing reaction takes place, the $SO_3$ reducing process is first conducted in a state in which the concentration of ammonia is high.

In the $SO_3$ reducing process, $SO_3$ is reduced by a $SO_3$ reducing catalyst, described later. By using $NH_3$ as a reducing agent, the $SO_3$ reducing catalyst concurrently carries out three reactions: (1) $SO_3$ reducing reaction, (2) denitrifying reaction, and (3) $NH_3$ decomposing reaction.

$$SO_3 + 2NH_3 + O_2 \rightarrow SO_2 + N_2 + 3H_2O \tag{1}$$

$$4NH_3 + 4NO + O_2 \rightarrow 4N_2 + 6H_2O \tag{2}$$

$$2NH_3 + 3/2O_2 \rightarrow N_2 + 3H_2O \tag{3}$$

Thus, the $SO_3$ reducing catalyst not only removes sulfur trioxide ($SO_3$) by reduction, but also reduces nitrogen oxides (NOx) in the exhaust gas using ammonia ($NH_3$) to convert into nitrogen gas ($N_2$).

In the $SO_3$ reducing process, the concentration of $NH_3$ at the downstream outlet of the $SO_3$ reducing catalyst should preferably be 3 ppm or higher, further preferably be 10 ppm or higher. If the concentration of $NH_3$ is too low, the reducing agent runs short in a downstream denitrifying process, so that sufficient denitrifying action cannot be brought about.

Next, on the downstream side of the SO$_3$ reducing process, the denitrifying process is conducted. In the denitrifying process, nitrogen oxides are removed using a denitrifying catalyst, described later, according to the following formula (2) or the like.

$$4NH_3 + 4NO + O_2 \rightarrow 4N_2 + 6H_2O \qquad (2)$$

For an exhaust gas containing a large quantity of SOx, for example, in a system having no SO$_3$ reducing process, SO$_2$ oxidizing reaction is produced by a denitrifying catalyst according to the following formula (4), so that the concentration of SO$_3$ increases further in some cases. For this reason as well, a method in which SO$_3$ is not yielded in exhaust gas as far as possible is needed. According to the treatment method in accordance with the present invention, SO$_3$ can be removed effectively on the upstream side of the denitrifying process.

$$SO_2 + 1/2O_2 \rightarrow SO_3 \qquad (4)$$

Generally, in the treatment method for exhaust gas exhausted from various types of combustion equipment such as a boiler, the exhaust gas exhausted from the boiler is sent to a denitrifying catalyst, and a denitrifying process is conducted. In the denitrifying process, ammonia NH$_3$ added on the upstream side of the denitrifying catalyst is used as a reducing agent.

In the denitrifying process in accordance with the present invention, the SO$_3$ reducing process is usually provided on the upstream side of the denitrifying process, so that denitrification is carried out by using ammonia added at the preceding stage of the SO$_3$ reducing process. However, a predetermined quantity of ammonia may be added as necessary at the following stage of the SO$_3$ reducing process and at the preceding stage of the denitrifying process. In the exhaust gas after the denitrifying process, both NOx and SO$_3$ are removed by reduction, and the added NH$_3$ is also removed after acting as a reducing agent.

As described above, in the present invention, for the exhaust gas flowing from the denitrifying process, both NOx and SO$_3$ are removed by reduction, so that corrosion caused by SO$_3$ is restrained even if the exhaust gas is caused to pass through the downstream equipment such as a dust collector and a wet type desulfurizer. Generally, between the denitrifying process and the desulfurizing process using a wet type desulfurizer, a heating process using a heater or steam, a dust collecting process using an electric dust collector, a heat recovery process using a gas heater, and the like process are included.

Exhaust gas treatment system

Figure 1 shows one example of an exhaust gas treatment system incorporating an exhaust gas treatment system in accordance with the present invention. Hereunder, the whole of the exhaust gas treatment system in accordance with the embodiment shown in Figure 1 will be described in detail with reference to the accompanying drawing.

In the present invention, a SO$_3$ reducing catalyst on the upstream side and a denitrifying catalyst on the downstream side are provided in series with respect to the flow direction of exhaust gas containing nitrogen oxides.

In the system shown in Figure 1, on the downstream side of a boiler 1, a SO$_3$ reducing catalyst 2, a denitrifier 3, an air heater (A/H) 4, which is heating means, a dust collector 5, a heat exchanger (GGH) 6 for recovering heat energy, a wet type desulfurizer (desulfurizing absorption tower) 7, a heat exchanger (GGH) 6 for reheating, and a stack 8 are arranged in that order. The SO$_3$ reducing catalyst 2 is provided on the downstream side of the boiler 1 and on the upstream side of the denitrifier 3. On the upstream side of the SO$_3$ reducing catalyst 2, NH$_3$ adding means 9 for adding ammonia, which serves as a reducing agent, is provided.

In the system in accordance with the present invention exemplified in Figure 1, as the NH$_3$ adding means 9 provided on the upstream side of the SO$_3$ reducing catalyst 2, equipment formed by, for example, a reducing agent injection pipe or a plurality of spray nozzles is used. As a method for injecting a reducing agent containing ammonia, there is available a method in which the reducing agent is vaporized, and the vaporized reducing agent is diluted by adding air, inert gas, water vapor, etc. before the reducing agent is added to the exhaust gas. At this time, it is effective to arrange the nozzles so that the reducing agent flows uniformly to the SO$_3$ reducing catalyst and the denitrifying catalyst. In some cases, a plurality of nozzles is arranged perpendicularly to the gas flow.

As the SO$_3$ reducing catalyst 2 used in this system, any catalyst can be used if it has a SO$_3$ reducing function. For example, a catalyst in which Ru is carried as an active metal on a carrier can be cited. The kind of carrier used for the SO$_3$ reducing catalyst is not subject to any special restriction, but the carrier is preferably at least one kind selected from a group consisting of titania, alumina, zirconia, silica, and zeolite. Also, the $SO_3$ reducing catalyst can contain at least one kind selected from a group consisting of Mo, W and V as a co-catalyst in the carrier as necessary.

The shape of the $SO_3$ reducing catalyst is not subject to any special restriction. For example, a honeycomb-shaped catalyst, a catalyst formed by stacking the honeycomb-shaped catalysts, a catalyst formed by filling particulate catalysts, and the like can be used. In particular, a honeycomb-shaped catalyst is preferably used.

As a denitrifying catalyst used in the denitrifier 3 of this system, a catalyst formed by carrying at least one kind selected from a group consisting of Mo, W and V as an active metal on a carrier containing titania can be used preferably. In addition, a catalyst in which an active metal of at least one kind selected from a group consisting of Pt, Pd, Ir, Ru, Cu, Co, Fe, Ag, Mn, Ni, Zn and In is contained in the carrier of at least one kind selected from a group consisting of $Al_2O_3$, $SiO_2$, $ZrO_2$, $TiO_2$, metallosilicate, and zeolite can be used.

The shape of the nitrifying catalyst is not subject to any special restriction. For example, a honeycomb-shaped catalyst, a catalyst formed by stacking the honeycomb-shaped catalysts, a catalyst formed by filling particulate catalysts, and the like can be used. In particular, a honeycomb-shaped catalyst is preferably used.

In the treatment system in accordance with the present invention, as described above, the $SO_3$ reducing catalyst 2 on the upstream side and the denitrifying catalyst system 3 on the downstream side are arranged in series with respect to the flow of exhaust gas. On the downstream side of the catalyst system in which these two types of catalysts are combined with each other, various types of equipment as shown in Figure 1 are provided according to the treatment of exhaust gas.

In the system shown in Figure 1, the air heater (A/H) 4, which is heating means, and the dust collector 5 are provided on the downstream side of the denitrifier 3. The dust collector 5 is not subject to any special restriction if it can collect dust roughly before the exhaust gas is introduced into the desulfurizing absorption tower 7.

On the downstream side of the dust collector 5, the heat exchanger (GGH) 6 for recovering heat energy and the desulfurizer (desulfurizing absorption tower) 7 are provided. The desulfurizer 7 is not subject to any special restriction. For example, a wet type desulfurizer generally used for flue gas treatment or a desulfurizer in which a cooling tower is provided at the preceding stage of an absorption tower is used. As the desulfurizer 7, an ordinary wet type desulfurizer can be used. As an absorbent used for wet desulfurization, aqueous solution of absorbent (alkali absorbent) of calcium carbonate, calcium oxide, calcium hydroxide, sodium carbonate, sodium hydroxide, and the like can be cited.

In the system shown in Figure 1, which uses a wet desulfurization method, the heat exchanger 6 for reheating is provided on the downstream side of the desulfurizing absorption tower 7, and the exhaust gas is discharged to the air through the stack 8 after passing through these types of equipment. In the heat exchanger 6 for reheating, the combustion exhaust gas whose temperature has been decreased is heated by heat energy recovered by the heat exchanger 6 for heat recovery at the preceding stage of the desulfurizer 7. Usually, the heat exchanger for heat recovery and the heat exchanger for reheating are formed by a gas heater of a system in which heat energy is exchanged by using a heat medium as a medium, and may be a separate system or may be a gas-gas heater for directly effecting heat exchange if they can cool and heat the exhaust gas, respectively.

In the above-described system shown in Figure 1, on the downstream side of the catalyst system in which the $SO_3$ reducing catalyst 2 and the denitrifying catalyst 3 are combined with each other, since nitrogen oxides and $SO_3$ component contained in the exhaust gas have been removed with high efficiency, corrosion and deterioration of equipment are restrained, and hence system control and trouble can be reduced.

The exhaust gas to be treated by the treatment system in accordance with the present invention is boiler exhaust gas generated in a thermal electric power station, a factory, etc. in which a fuel containing sulfur and mercury, such as coal and heavy oil, is burned or heating furnace exhaust gas generated in a metal factory, an oil refinery, a petrochemical plant, etc. The treatment system in accordance with the present invention is suitable for a large quantity of exhaust gas containing carbon dioxide, oxygen, SOx, soot, or water.

Hereunder, the present invention will be described in more detail with reference to examples. The present invention is not limited to these examples.

Example 1 (preparation of catalysts)

(Honeycomb catalysts 1 to 10)

Aqueous solution of ruthenium chloride ($RuCl_3$) was impregnated into and carried on particles of compound 1: $TiO_2$ (MC-90 manufactured by Ishihara Sangyo Kaisha, Ltd.), compound 2: $\gamma$-$Al_2O_3$ (manufactured by Sumitomo Chemical Co., Ltd.), compound 3: $SiO_2$ (manufactured by Fuji Silysia Chemical Ltd.), compound 4: zirconia (manufactured by Nikki Chemical Co., Ltd.), compound 5: silicalite (manufactured by Mobil Corp.), compound 6: $TiO_2$-$WO_3$ (weight ratio 90:10), compound 7: $TiO_2$-$WO_3$ (weight ratio 80:20), compound 8: $TiO_2$-$WO_3$-$V_2O_5$ (weight ratio 90:9:1), compound 9: $TiO_2$-$MoO_3$-$V_2O_5$ (weight ratio 90:9:1), and compound 10: $TiO_2$-$SiO_2$ (weight ratio 90:10) so that the carrying amount of Ru per particle was 0.5%, and firing was accomplished in the air at $500°C$ for about 5 hours after evaporation to dryness. As a result, powder catalysts 1 - 10 were obtained.

The powder catalysts 1 - 10 were put in water, and slurried by ball mill grinding. The slurries 1 - 10 were applied to and carried on a honeycomb (Ap: 445 $m^2/m^3$) of $TiO_2$-$WO_3$ (weight ratio 90:10) with a pitch of 7.0 mm and a wall thickness of 1.0 mm in an amount of 200g/$m^2$ per honeycomb surface area, by which honeycomb catalysts 1-10 were obtained.

(Honeycomb catalyst 11)

As the denitrifying catalyst, a honeycomb catalyst (pitch: 7.0 mm, wall thickness: 1.0 mm, Ap: 445 $m^2/m^3$) consisting of $TiO_2$-$WO_3$-$V_2O_5$ (weight ratio 91:8.8:0.2) was used.

Example 2 (exhaust gas treatment test A)

Catalyst systems were formed by combining honeycomb catalysts 1 - 10 ($SO_3$ reducing catalyst) prepared in example 1 and honeycomb catalyst 11 (denitrifying catalyst) with each other, and exhaust gas treatment tests were conducted under the conditions described below.

[Test conditions]

The gas composition was 150 ppm NOx, 2900 ppm SOx (including 80 ppm $SO_3$) , 180 ppm $NH_3$, 1.3% $O_2$, 10% $H_2O$, 10% $CO_2$, the balance being $N_2$.

The test conditions were as follows: temperature: 380°C, superficial velocity: 3.3 mN/s, gas quantity: 30 $m^3$N/s, catalyst formation: 50 mm square x 800 mm (preceding stage: one $SO_3$ reducing catalyst, following stage: one denitrifying catalyst), and GHSV: 15000 $h^{-1}$ at outlet of $SO_3$ reducing catalyst, 5000 $h^{-1}$ at outlet of denitrifying catalyst (AV: 34 $m^3/m^2$ • h at outlet of $SO_3$ reducing catalyst, 11 $m^3/m^2$ • h at outlet of denitrifying catalyst).

Table 1 gives exhaust gas treatment performance at a total GHSV of 5000 $h^{-1}$ in the case where honeycomb catalysts 1 - 10 serving as the $SO_3$ reducing catalyst and honeycomb catalyst 11 serving as the denitrifying catalyst were arranged in series. The concentration of NOx was measured by the chemiluminescence method, the concentration of $NH_3$ was measured by ion chromatography, and the concentration of $SO_3$ was measured by arsenazo III method using a spiral tube. The NOx removal efficiency and $SO_3$ reduction amount were calculated by the following formulae.

.

$$\text{NOx removal efficiency (\%) = (1 - outlet NOx / inlet}$$

$$\text{NOx) x 100}$$

.

$$\text{SO}_3 \text{ reduction amount (ppm) = inlet SO}_3 \text{ - outlet SO}_3$$

The target performance of this exhaust gas treatment test was set so as to be a target that satisfies all of the following performances.

· NOx removal efficiency: 85% or higher
· $SO_3$ reduction amount: 0 ppm or larger ($SO_3$ is reduced)
· Leak of $NH_3$: 15 ppm or less

[Table 1]

| Exhaust gas treatment performance of combined catalysts | | | | | |
|---|---|---|---|---|---|
| Test | Preceding-stage catalyst (coated carrier: $SO_3$ reducing catalyst) | Following-stage catalyst (denitrifying catalyst) | NOx removal efficiency (%) | $SO_3$ reduction amount (ppm) | Leak of $NH_3$ (ppm) |
| 1 | Catalyst 1 ($TiO_2$ carrier) | Catalyst 11 ($TiO_2$-$WO_3$-$V_2O_5$) | 89 | 6 | 10 |

[Table 1]  (continued)

| Exhaust gas treatment performance of combined catalysts | | | | | |
|---|---|---|---|---|---|
| Test | Preceding-stage catalyst (coated carrier: $SO_3$ reducing catalyst) | Following-stage catalyst (denitrifying catalyst) | NOx removal efficiency (%) | $SO_3$ reduction amount (ppm) | Leak of $NH_3$ (ppm) |
| 2 | Catalyst 2 ($Al_2O_3$ carrier) | Catalyst 11 | 90 | 6 | 9 |
| 3 | Catalyst 3 ($SiO_2$ carrier) | Catalyst 11 | 90 | 7 | 9 |
| 4 | Catalyst 4 ($ZrO_2$ carrier) | Catalyst 11 | 89 | 8 | 10 |
| 5 | Catalyst 5 (Silicalite carrier) | Catalyst 11 | 90 | 7 | 9 |
| 6 | Catalyst 6 ($TiO_2$-$WO_3$ carrier) | Catalyst 11 | 95 | 7 | 7 |
| 7 | Catalyst 7 ($TiO_2$-$WO_3$ carrier) | Catalyst 11 | 96 | 7 | 7 |
| 8 | Catalyst 8 ($TiO_2$-$WO_3$-$V_2O_3$ carrier) | Catalyst 11 | 96 | 6 | 5 |
| 9 | Catalyst 9 ($TiO_2$-$WO_3$-$MoO_3$ carrier) | Catalyst 11 | 96 | 7 | 8 |
| 10 | Catalyst 10 ($TiO_2$-$SiO_2$ carrier) | Catalyst 11 | 93 | 7 | 8 |

From the above results, it was confirmed that the catalyst systems in tests 1 to 10, in which the $SO_3$ reducing catalyst is provided at the preceding stage and the denitrifying catalyst is provided at the following stage, are effective for denitrification, $SO_3$ reduction, and decrease in leak of $NH_3$, and in particular, these catalyst systems are promising for achieving $SO_3$ reduction.

Example 3 (preparation of catalyst)

Various tests were conducted based on test 6 having high performance in the above-described tests on catalyst system.

(Honeycomb catalysts 12 - 14)

Honeycomb catalysts 12 and 13 were prepared by the same preparation method as that for $SO_3$ reducing catalyst 6 (honeycomb catalyst 6) in example 1 except that slurries that carried 0.3% and 1% Ru, in place of 0.5% Ru, on $TiO_2$-$WO_3$ carrier of compound 6 were prepared.
Also, honeycomb catalyst 14 was prepared by the same preparation method as that for $SO_3$ reducing catalyst 6 (honeycomb catalyst 6) in example 1 except that slurry 6 was applied to the honeycomb in an amount of $100g/m^2$ per honeycomb surface area in place of $200g/m^2$.

Example 4 (exhaust gas treatment test B)

Exhaust gas treatment tests (tests 11, 12 and 13) were conducted in the same way as test 6 in example 2 on catalyst systems in which each one of the honeycomb catalysts 12, 13 and 14 ($SO_3$ reducing catalysts) and one

**EP 1 452 222 A1**

denitrifying catalyst 11 were combined with each other. Further, an exhaust gas treatment test (test 14) was conducted in the same way as described above on a catalyst system in which two honeycomb catalysts 6 ($SO_3$ reducing catalysts) and one denitrifying catalyst 11 were combined with each other.

Table 2 gives the results of tests on the above-described catalyst systems.

[Table 2]

| Exhaust gas treatment performance of various combined catalysts | | | | | |
|---|---|---|---|---|---|
| Test | Preceding-stage catalyst ($SO_3$ reducing catalyst) | Following-stage catalyst (denitrifying catalyst) | NOx removal efficien cy (%) | $SO_3$ reductio n amount (ppm) | Leak of $NH_3$ (ppm ) |
| 11 | Catalyst 11 (Ru (0.3)/ $TiO_2$-$WO_3$), one | Catalyst 11 ($TiO_2$-$WO_3$-$V_2O_5$) | 95 | 6 | 8 |
| 12 | Catalyst 12 (Ru (1.0)/$TiO_2$-$WO_3$ ) , one | Catalyst 11 | 96 | 10 | 5 |
| 13 | Catalyst 13 (Ru (0.5)/ $TiO_2$-$WO_3$: 100g/m$^2$ coated), one | Catalyst 11 | 95 | 7 | 7 |
| 14 | Catalyst 6, two | Catalyst 11, one | 91 | 12 | 1 |

From the above test results, it was confirmed that even when the Ru carrying amount or the coating amount of $SO_3$ reducing catalyst is changed, the catalyst systems in tests 11 to 13 are effective for denitrification, $SO_3$ reduction, and decrease in leak of $NH_3$, and in particular, these catalyst systems are promising for achieving $SO_3$ reduction. Also, it was confirmed that even when the arrangement ratio of $SO_3$ reducing catalyst to denitrifying catalyst is changed, the catalyst system in test 14 achieves the target performance in terms of $SO_3$ reduction etc.

Example 5 (exhaust gas treatment test C)

The activity evaluation was carried out under the following test conditions based on the catalyst combination and test conditions of test 6 that had exhibited high performance in the above-described tests on catalyst system.

- Test 15 ... An activity evaluation test was conducted by the same method as that of test 6 except that the concentration of $NH_3$ in the gas at the inlet of catalyst was 153 ppm in place of the 180 ppm in test 6 in example 2.
- Test 16 ... An activity evaluation test was conducted by the same method as that of test 6 except that the concentration of $SO_3$ in the gas at the inlet was 50 ppm in place of the 80 ppm in test 6 in example 2.
- Test 17 ... An activity evaluation test was conducted by the same method as that of test 6 except that the concentration of NOx in the gas at the inlet was 170 ppm in place of the 150 ppm in test 6 in example 2.
- Test 18 ... An activity evaluation test was conducted by the same method as that of test 6 except that the concentration of $O_2$ in the gas at the inlet was 2% in place of the 1.3% in test 6 in example 2.
- Test 19 ... An activity evaluation test was conducted by the same method as that of test 6 except that the concentration of SOx in the gas at the inlet was 4000 ppm (including 80 ppm of concentration of $SO_3$) in place of the 2900 ppm (including 80 ppm of concentration of $SO_3$) in test 6 in example 2.

Table 3 gives the exhaust gas treatment test results in the above-described tests 15 to 19.

[Table 3]

Exhaust gas treatment performance of combined catalysts under each test condition

| Test | Changed item of test conditions | Preceding-stage catalyst (SO$_3$ reducing catalyst) | Following-stage catalyst (denitrifying catalyst) | NOx removal efficiency (%) | SO$_3$ reduction amount (ppm) | Leak of NH$_3$ (ppm) |
|---|---|---|---|---|---|---|
| 15 | NH$_3$ Concentration 153 ppm | Catalyst 6 | Catalyst 11 | 90 | 4 | 1 |
| 16 | SO$_3$ concentration 50 ppm | Catalyst 6 | Catalyst 11 | 96 | 6 | 8 |
| 17 | Nox concentration 170 ppm | Catalyst 6 | Catalyst 11 | 91 | 5 | 1 |
| 18 | O$_2$ concentration 2 % | Catalyst 6 | Catalyst 11 | 93 | 4 | 3 |
| 19 | SOx concentration 4000 ppm | Catalyst 6 | Catalyst 11 | 95 | 6 | 8 |

From the test results given in Table 3, it was confirmed that the catalyst systems in tests 15 to 19, in which the SO$_3$ reducing catalyst is provided at the preceding stage and the denitrifying catalyst is provided at the following stage, are effective for denitrification, $SO_3$ reduction, and decrease in leak of $NH_3$ under any of the test conditions.

Comparative example 1 (exhaust gas treatment test)

Exhaust gas treatment tests were conducted under the following conditions using the aforementioned $SO_3$ reducing catalyst 6 singly.

[Test conditions]

The gas composition was 150 ppm NOx, 2900 ppm SOx (including 80 ppm $SO_3$), 180 ppm $NH_3$, 1.3% $O_2$, 10% $H_2O$, 10% $CO_2$, the balance being $N_2$.

The test conditions were as follows: temperature: 380°C, superficial velocity: 3.3 mN/s, gas quantity: 30 $m^3N/$ s, catalyst formation: 50 mm square x 800 mm (three $SO_3$ reducing catalysts), and GHSV: 15000 $h^{-1}$ at outlet of the first $SO_3$ reducing catalyst, 7500 $h^{-1}$ at outlet of the second one, and 5000 $h^{-1}$ at outlet of the third one (AV: 34 $m^3/m^2$ • h at outlet of the first $SO_3$ reducing catalyst, 17 $m^3/m^2$ • h at outlet of the second one, and 11 $m^3/m^2$ • h at outlet of the third one).

Table 4 gives the exhaust gas treatment performance results at the catalyst outlet at each GHSV (comparative tests 1, 2 and 3).

Further, an exhaust gas treatment test was conducted by arranging two denitrifying catalysts at the preceding stage and one $SO_3$ reducing catalyst at the following stage in series under the same test conditions as described above. Table 4 concurrently gives the exhaust gas treatment performance result at the catalyst outlet (total GHSV 5000 $h^{-1}$: comparative test 4) .

[Table 4]

Exhaust gas treatment performance of comparative catalyst

| Comparative test | Preceding-stage catalyst | Following-stage catalyst | NOx removal efficiency (%) | $SO_3$ reduction amount (ppm) | Leak of $NH_3$ (ppm) |
|---|---|---|---|---|---|
| 1 | Catalyst 6 (one $SO_3$ reducing catalyst, GHSV 15000 h$^{-1}$) | - | 52 | 10 | 70 |
| 2 | Catalyst 6 (two $SO_3$ reducing catalysts, GHSV 7500 h$^{-1}$) | - | 74 | 13 | 15 |
| 3 | Catalyst 6 (three $SO_3$ reducing catalysts, GHSV 5000 h$^{-1}$) | - | 80 | 5 | 0 |
| 4 | Catalyst 11 (two denitrifying catalysts) | Catalyst 6 $SO_3$ (one reducing catalyst) | 85 | -5 (Increase) | 3 |

From the above-described test results, the following facts were found: In comparative test 1 in which one $SO_3$ reducing catalyst is used, although a decrease in $SO_3$ is recognized, NOx removal efficiency and leak of $NH_3$ do not satisfy the target performance. Also, in comparative test 2 in which two $SO_3$ reducing catalysts are used, although a decrease in $SO_3$ is recognized as in comparative example 2 and leak of $NH_3$ is little, NOx removal efficiency does not satisfy the target performance. Further, in comparative test 3 in which three $SO_3$ reducing catalysts are used, $SO_3$ reduction amount is small and NOx removal efficiency is still low.

Also, in comparative test 4 in which two denitrifying catalysts are arranged at the preceding stage and one $SO_3$ reducing catalyst is arranged at the following stage, the $SO_3$ reducing function is not recognized, and inversely $SO_3$ tends to increase.

The above-described results revealed the following fact: In the case where a large quantity of $NH_3$ is contained, (1) $SO_3$ reducing reaction, (2) denitrifying reaction, and (3) $NH_3$ decomposing reaction take place concurrently, and the $SO_3$ reducing catalyst can carry out denitrification and $SO_3$ reduction at the same time.

On the other hand, in the case where a small quantity of $NH_3$ is contained, only (3) $NH_3$ decomposing reaction proceeds, and (1) $SO_3$ reducing reaction and (2) denitrifying reaction scarcely proceed.

For the above reason, it was clarified that in order to remove exhaust gas efficiently using the $SO_3$ reducing catalyst, it is preferable that the $SO_3$ reducing catalyst be arranged at the preceding stage and the denitrifying catalyst be arranged at the following stage, by which NOx, $SO_3$ and $NH_3$ are reduced efficiently.

## Claims

1. An exhaust gas treatment system for removing nitrogen oxide and sulfur trioxide in exhaust gas by using a catalyst, **characterized in that** a $SO_3$ reducing catalyst on the upstream side and a denitrifying catalyst on the downstream side are arranged in series with respect to the flow direction of exhaust gas.

2. The exhaust gas treatment system according to claim 1, **characterized in that** said $SO_3$ reducing catalyst is a catalyst in which Ru is carried as an active metal on a carrier.

3. The exhaust gas treatment system according to claim 1 or 2, **characterized in that** the carrier used for said $SO_3$ reducing catalyst is at least one kind selected from a group consisting of titania, alumina, zirconia, silica, and zeolite.

4. The exhaust gas treatment system according to claim 2 or 3, **characterized in that** said $SO_3$ reducing catalyst contains at least one kind selected from a group consisting of Mo, W and V as a co-catalyst in the carrier.

5. The exhaust gas treatment system according to any one of claims 1 to 4, **characterized in that** said denitrifying catalyst carries at least one kind selected from a group consisting of Mo, W and V as an active metal on a carrier containing titania.

6. The exhaust gas treatment system according to any one of claims 1 to 5, **characterized in that** both of said $SO_3$ reducing catalyst and said denitrifying catalyst are a catalyst formed into a honeycomb shape.

7. An exhaust gas treatment method for removing nitrogen oxide and sulfur trioxide in exhaust gas by using a catalyst, **characterized in that** said treatment method includes a $SO_3$ reducing process for reducing $SO_3$ using a $SO_3$ reducing catalyst on the upstream side and a denitrifying process for removing nitrogen oxides using a denitrifying catalyst on the downstream side with respect to the flow direction of exhaust gas.

8. The exhaust gas treatment method according to claim 7, **characterized in that** said treatment method includes an $NH_3$ adding process for adding ammonia $NH_3$, which is a reducing agent for nitrogen oxides and $SO_3$, in a mole ratio of $NH_3/NOx$ not lower than the equivalent at the preceding stage of said $SO_3$ reducing process.

9. The exhaust gas treatment method according to claim 7 or 8, **characterized in that** the concentration of $NH_3$ at the downstream outlet of the $SO_3$ reducing catalyst is 3 ppm or higher in said $SO_3$ reducing process.

FIG.1

**European Patent Office**    **EUROPEAN SEARCH REPORT**

Application Number

EP 03 29 3151

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199844<br>Derwent Publications Ltd., London, GB;<br>Class E36, AN 1998-514187<br>XP002285589<br>& JP 10 225620 A (MITSUBISHI JUKOGYO KK),<br>25 August 1998 (1998-08-25)<br>* abstract * | 1-9 | B01D53/86<br>B01J23/46 |
| A | DATABASE WPI<br>Section Ch, Week 199954<br>Derwent Publications Ltd., London, GB;<br>Class E36, AN 1999-622766<br>XP002285590<br>& JP 11 267459 A (MITSUBISHI JUKOGYO KK),<br>5 October 1999 (1999-10-05)<br>* abstract * | 1-9 | |
| A | DATABASE WPI<br>Section Ch, Week 198029<br>Derwent Publications Ltd., London, GB;<br>Class E36, AN 1980-50588C<br>XP002285591<br>& JP 55 073329 A (BABCOCK-HITACHI KK),<br>3 June 1980 (1980-06-03)<br>* abstract * | 1-9 | TECHNICAL FIELDS SEARCHED (Int.Cl.7)<br><br>B01D<br>B01J |
| A | PATENT ABSTRACTS OF JAPAN<br>vol. 1997, no. 05,<br>30 May 1997 (1997-05-30)<br>& JP 09 000874 A (ISHIKAWAJIMA HARIMA HEAVY IND CO LTD),<br>7 January 1997 (1997-01-07)<br>* abstract * | 1-9 | |

-/--

The present search report has been drawn up for all claims

| Place of search | Date of completion of the search | Examiner |
|---|---|---|
| MUNICH | 23 June 2004 | Jourdan, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**European Patent Office**

# EUROPEAN SEARCH REPORT

Application Number

EP 03 29 3151

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 004, no. 038 (C-004), 27 March 1980 (1980-03-27) & JP 55 011020 A (KOBE STEEL LTD), 25 January 1980 (1980-01-25) * abstract * ----- | 1-9 | |
| | | | **TECHNICAL FIELDS SEARCHED (Int.Cl.7)** |

The present search report has been drawn up for all claims

| Place of search | Date of completion of the search | Examiner |
|---|---|---|
| MUNICH | 23 June 2004 | Jourdan, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 03 29 3151

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2004

| Patent document cited in search report | | Publication date | Patent family member(s) | | Publication date |
|---|---|---|---|---|---|
| JP 10225620 | A | 25-08-1998 | JP | 3495542 B2 | 09-02-2004 |
| JP 11267459 | A | 05-10-1999 | JP | 3495591 B2 | 09-02-2004 |
| JP 55073329 | A | 03-06-1980 | JP | 63051733 B | 14-10-1988 |
| JP 09000874 | A | 07-01-1997 | NONE | | |
| JP 55011020 | A | 25-01-1980 | NONE | | |

EPO FORM P0459